# DEMANDE DE BREVET EUROPEEN

(11) **EP 1 892 222 A1**
(43) Date de publication de la demande: **27.02.2008**
(21) Numéro de dépôt: 07290988.0
(22) Date de dépôt: 08.08.2007
(51) Int. Cl.: C02F 1/04, E03B 3/03

(54) **Système d'évaporation d'eaux pluviales et d'eaux usées permettant d'éviter des engorgements en eau dans un terrain**

(30) Priorité: 08.08.2006 FR 0607269
(71) Demandeur: Aumis, Alfred, 97231 Robert (FR)
(72) Inventeur: Aumis, Alfred, 97231 Robert (FR)
(74) Mandataire: Debay, Yves

(57) **Abrégé**

La présente invention concerne un système d'évaporation d'eaux pluviales et d'eaux usées destiné à réduire ou éliminer le stockage d'eaux par la terre dans une parcelle de terrain, comprenant une cuve en armature de béton (10), des moyens (16, 17) d'alimentation de la cuve (10) en eaux pluviales et eaux usées, une source d'alimentation électrique (15), des moyens (11) d'évaporation d'eau dans la cuve (10) alimentés électriquement par la source d'alimentation (15), et des moyens d'évacuation de la vapeur générée dans la cuve (10), caractérisé en ce que les moyens (11) d'évaporation comprennent des tiges en V disposées au fond de la cuve (10) et incluant une pluralité de pastilles chauffantes, les moyens d'évacuation de la vapeur incluant un ventilateur (13) motorisé et un conduit de type cheminée.

## Description

La présente invention se rapporte au domaine des dispositifs de récupération des eaux pluviales et usées et plus particulièrement au domaine des dispositifs de récupération et d'élimination des eaux pluviales et usées.

Actuellement, il est connu de récupérer les eaux usées dans des fosses ou des bassins adaptés pour leur traitement ou leur épuration. Toutefois, l'élimination de ces eaux peut s'avérer complexe notamment lorsque les terres ont atteint les limites de leurs capacités d'absorption.

La présente invention a pour objet de palier un ou plusieurs inconvénients de l'art antérieur et notamment de proposer une solution permettant d'éliminer et de prévenir les inconvénients que cause les remplissages de fosses septiques et/ou de fosses de récupération d'eaux usées et/ou pluviales en permettant le recyclage d'au moins une partie de ces différentes eaux usées.

Cet objectif est atteint grâce à un système d'évaporation d'eaux pluviales et d'eaux usées destiné à réduire ou éliminer le stockage d'eaux par la terre dans une parcelle de terrain, comprenant une cuve en armature de béton, des moyens d'alimentation de la cuve en eaux pluviales et eaux usées, une source d'alimentation électrique, des moyens d'évaporation d'eau dans la cuve alimentés électriquement par la source d'alimentation, et des moyens d'évacuation de la vapeur générée dans la cuve, caractérisé en ce que les moyens d'évaporation comprennent des tiges en V disposées au fond de la cuve et incluant une pluralité de pastilles chauffantes, les moyens d'évacuation de la vapeur incluant un ventilateur motorisé et un conduit de type cheminée.

Selon une variante de l'invention, le système d'évaporation comprend un dispositif activateur sensible à une pression de fluide de type manocontact pour commander une coupure de l'alimentation des moyens d'évaporation.

Selon une autre variante de l'invention, la source d'alimentation électrique du système d'évaporation comprend un boîtier électrique muni d'un disjoncteur et la cuve est équipée d'un détecteur de pression thermostat couplé au dispositif activateur pour permettre de commander le chauffage des pastilles.

Selon une autre variante de l'invention, le système d'évaporation comprend un conduit de type cheminée associé à des moyens de récupération de l'eau évaporée.

Selon une autre variante de l'invention, le système d'évaporation comprend au moins un couvercle pour recouvrir la cuve.

Selon une autre variante de l'invention, le système d'évaporation comprend un appareil de mesure et d'alerte de remplissage pour cuve de récupération.

Une application particulière de l'appareil de mesure et d'alerte de remplissage du système d'évaporation met en jeu :
- une cuve de récupération d'eaux usées,
- des moyens de surveillance associés à la cuve de récupération et incluant un récepteur pour détecter un niveau seuil de remplissage,
- un boîtier central doté d'une instrumentation électronique permettant de recevoir des informations du récepteur, et
- des moyens de communication pour envoyer une alerte, déclenchés lorsque le récepteur détecte que le niveau seuil a été atteint.

Selon une particularité de l'invention, la détection par l'appareil de mesure et d'alerte de remplissage déclenche la mise en oeuvre de moyens de surveillance du système d'évaporation qui comprennent au moins un récepteur d'ultrasons associé à un émetteur d'ultrasons.

Selon une autre particularité de l'invention, la source d'alimentation électrique du système d'évaporation fournit l'alimentation électrique d'au moins du ventilateur motorisé et d'un émetteur d'ultrasons des moyens de surveillance, un bouton d'arrêt des moyens d'évaporation étant prévu dans le boîtier central.

Selon une autre particularité de l'invention, le boîtier central du système d'évaporation inclut un vumètre électronique pour fournir une information sur la hauteur de remplissage de la cuve de récupération.

L'invention, avec ses caractéristiques et avantages, ressortira plus clairement à la lecture de la description faite en référence au dessin annexé dans lequel :

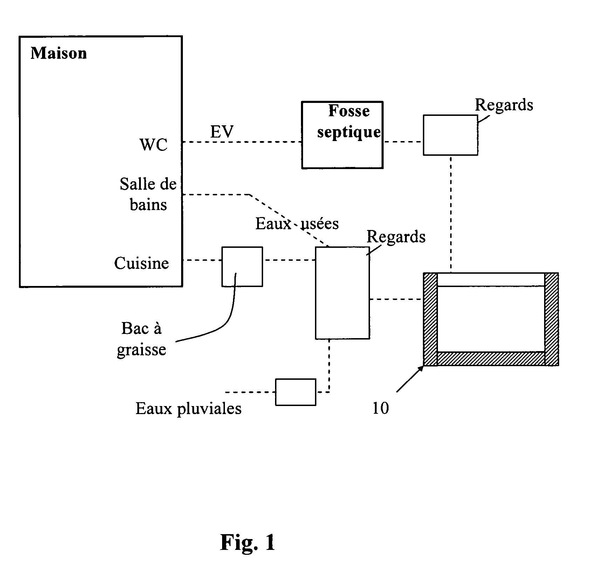

- la figure 1 représente un exemple de positionnement des éléments de récupération des eaux usées dans une installation ;

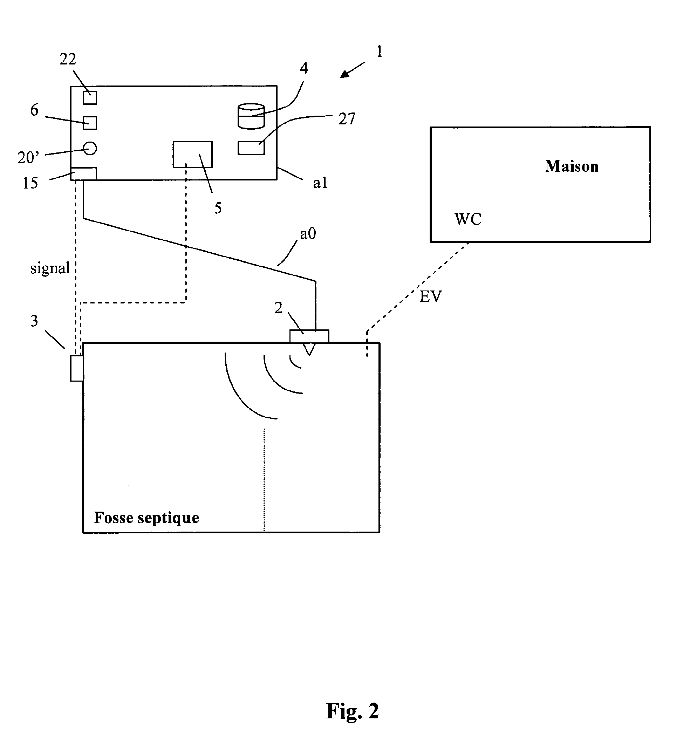

- la figure 2 représente un exemple de positionnement d'un appareil de mesure et d'alerte du remplissage d'une fosse sceptique ou de récupération d'eaux usées ou de pluie ;

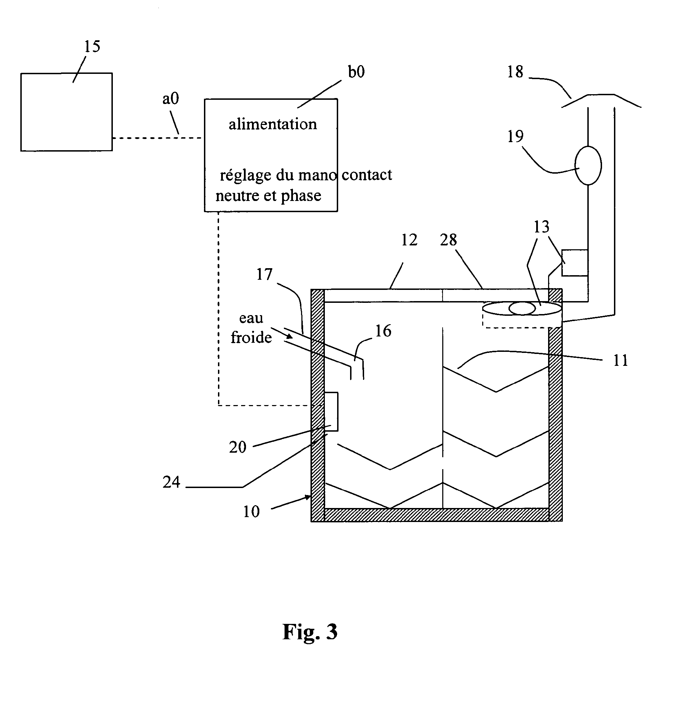

- la figure 3 représente l'armature et la composition de la cuve de l'évaporateur qui est indépendant et qui contient 2 loges.

Le système de la présente invention est appelé RAFM (R : rotation, A : alerteur, FM : évaporateur de fossile vapeur). Ce système peut être mis en place sur n'importe quelle installation comprenant une fosse septique ou une cuve (10) de récupération d'eaux usées. Il convient de remarquer que dans la description qui suit, l'utilisation des termes « fosse » ou « cuve » font référence à un moyen de stockage qui permet la collecte et la récupération d'eaux usées ou de pluie.

Le système selon l'invention comprend ainsi une cuve (10), préférentiellement enrobée d'armature en béton B22. Dans un souci de gain d'espace et de réduction de l'encombrement, la cuve (10) présente un volume disposé verticalement ce qui permet sa mise en place au niveau de parcelles dont la surface est restreinte. La cuve (10) se trouve alors alimentée en eaux pluviales et/ou eaux usées par au moins un moyen d'alimentation (17) relié avec les systèmes d'évacuation de salles de bain, de cuisines ou de WC, ce système d'alimentation (17) venant déboucher dans la partie haute de la cuve (10) de récupération. L'accès aux fosses de récupération des eaux usées pour un utilisateur peut se réaliser au niveau de regards conçus et aménagés pour permettre une maintenance optimale de l'installation.

Selon une variante de réalisation, le système selon l'invention peut également venir s'adapter au niveau de bordures de rivières et participer à l'élimination du trop-plein d'eau provenant du débordement de rivières pour prévenir des risques d'inondation.

A ce moyen de récupération (10), se trouve associée une source d'alimentation électrique (15) qui peut, par exemple, être formée par un générateur de courant électrique. Cette source d'alimentation électrique (15) vient fournir en énergie une ou plusieurs tiges (11) disposées sur les parois et dans le fond de la cuve (10), ces tiges (11) se trouvant associées à une pluralité de pastilles chauffantes. Ces éléments chauffants que sont les tiges (11) et les pastilles sont ainsi positionnés en contact avec les eaux usées stockées dans la cuve (10) de récupération ou dans la fosse sceptique et permettent une évaporation des eaux stockées.

Selon une variante de réalisation le système comprend des capteurs solaires qui permettent de faire évaporer les eaux stockées à partir de l'énergie solaire récupérée.

L'évacuation de l'eau mise en évaporation dans la cuve (10) met en jeu un ventilateur (13) disposé dans un orifice de la partie haute de la cuve (10) de récupération et préférentiellement au niveau du plafond de la cuve (10) voire d'un couvercle (12, 28) de la cuve (10). Ce ventilateur (13) permet l'évacuation des vapeurs vers un conduit qui vient former une cheminée, l'orifice d'évacuation extérieur se trouve surmonté d'un couvercle (18) de protection pour limiter les infiltrations d'eau. L'élimination et l'évacuation des eaux usées permet ainsi une rotation des eaux stockées dans la cuve (10) de récupération.

Selon une variante de réalisation, le conduit de type cheminée se trouve associé à des moyens (19) permettant la récupération et le recyclage de l'eau évaporée. En connectant, par exemple, le moyen d'évacuation des vapeurs d'eaux usées à un système de chauffage par radiateur ou par échangeur de chaleur, les eaux recyclées peuvent alors, de façon non limitative, être utilisées pour participer au chauffage d'habitations.

Selon un mode de réalisation particulier de la cuve (10), celle-ci présente un volume avec une hauteur de 1,710 m, une largeur de 1,605 m, et une longueur de 2,010 m pour une capacité d'environ 3000 litres. La surface que vient occuper l'évaporateur peut alors être inférieure à 8 m².

L'activation de l'évaporation fait intervenir au moins un appareil de mesure et d'alerte du remplissage de la cuve (10) de récupération. Cet appareil comprend ainsi des moyens de surveillance (2, 3) associés à la cuve (10) qui forment un détecteur de niveau de remplissage. Ces moyens de surveillance (2, 3) sont reliés à un boitier central (1) qui permet d'analyser les informations transmises par les moyens de surveillance (2, 3) pour éventuellement permettre le déclenchement d'une alerte de vidange de la cuve (10) ou du système d'évaporation de l'invention lorsqu'une valeur seuil (4), enregistrée dans une mémoire du boitier central, est atteinte par la cuve de remplissage.

Selon un mode de réalisation particulier, l'alerte de vidange peut être transmise par un dispositif automatisé auprès d'un service d'épuration via un moyen de communication adapté, par exemple téléphonique ou Internet, avec l'organisme d'épuration.

Selon un mode de réalisation particulier, le dispositif d'alerte intègre un transformateur.

Selon un mode de réalisation préféré, les informations transmises par les moyens de surveillance (2, 3) permettent sur le boitier central (1) de visualiser le niveau du remplissage de la cuve (10) grâce à un dispositif de visualisation électronique de type vumètre.

Selon un mode de réalisation particulier, les moyens de surveillance (2, 3) sont formés par des émetteurs et des récepteurs à ultra-sons positionnés dans la partie supérieure, à l'intérieure de la cuve (10). Selon un mode de réalisation préféré, cet appareil présente des dimensions de l'ordre de 23 cm par 20 cm qui sont très réduites pour limiter son encombrement dans la cuve.

Selon un mode de réalisation préféré, les moyens de surveillance (2, 3) et le ventilateur (13) sont alimentés en électricité par une source d'alimentation électrique (15) commune avec les tiges (11) et les pastilles chauffantes.

Pour permettre un arrêt rapide de l'évaporation par l'utilisateur, le boitier central (1) comprend un bouton d'arrêt (22) des moyens d'évaporation. De même, le dispositif d'alimentation et d'activation des moyens d'évaporation (11) formés par les tiges et les pastilles chauffantes est connecté à un dispositif de coupure sensible à une pression de fluide de type manocontact, ce dispositif pouvant intervenir lorsque la pression du liquide dans la cuve devient trop importante par rapport aux capacités d'évacuation du moyen de ventilation (13). Ainsi, la cuve (10) est équipée d'un détecteur de pression (20) thermostat couplé au dispositif activateur qui commande la mise en route du chauffage des pastilles chauffantes. Ce détecteur (20) se trouve positionné contre une des parois intérieures de la cuve (10), protégé par une grille (24) et connecté avec le boitier d'alimentation (15) des moyens d'évaporation (11). La reconnaissance du franchissement de valeurs seuils de pression et/ou de température par le dispositif de détection (20) entraine le déclenchement ou l'arrêt des moyens d'évaporation (11) et/ou des moyens d'évacuation des eaux évaporées.

Le boitier d'alimentation électrique (15) peut également intégrer un disjoncteur.

Afin de réduire tout risque de court-circuit, l'ensemble des moyens de raccordement et de connexion (a0) entre les différents éléments électriques (15) et/ou électroniques (1) de l'installation sont réalisés de façon étanche.

## Revendications

1. Système d'évaporation d'eaux pluviales et d'eaux usées destiné à réduire ou éliminer le stockage d'eaux par la terre dans une parcelle de terrain, comprenant une cuve en armature de béton (10), des moyens (16, 17) d'alimentation de la cuve (10) en eaux pluviales et eaux usées, une source d'alimentation électrique (15), des moyens (11) d'évaporation d'eau dans la cuve (10) alimentés électriquement par la source d'alimentation (15), et des moyens d'évacuation de la vapeur générée dans la cuve (10), **caractérisé en ce que** les moyens (11) d'évaporation comprennent des tiges en V disposées au fond de la cuve (10) et incluant une pluralité de pastilles chauffantes, les moyens d'évacuation de la vapeur incluant un ventilateur (13) motorisé et un conduit de type cheminée.

2. Système selon la revendication 1, **caractérisé en ce que** le système comprend un dispositif activateur sensible à une pression de fluide de type manocontact pour commander une coupure de l'alimentation des moyens (11) d'évaporation.

3. Système selon la revendication 2, **caractérisé en ce que** la source d'alimentation électrique (15) comprend un boîtier électrique muni d'un disjoncteur et **en ce que** la cuve (10) est équipée d'un détecteur de pression (20) thermostat couplé au dispositif activateur pour permettre de commander le chauffage des pastilles.

4. Système selon une des revendications 1 à 3, **caractérisé en ce que** le conduit de type cheminée est associé à des moyens (19) de récupération de l'eau évaporée.

5. Système selon une des revendications 1 à 4, **caractérisé en ce que** le système comprend au moins un couvercle (12, 28) pour la cuve (10).

6. Système selon une des revendications 1 à 5, **caractérisé en ce que** le système comprend un appareil de mesure et d'alerte de remplissage pour fosse septique.

7. Système selon la revendication 6, **caractérisé en ce qu'**une application de l'appareil de mesure et d'alerte de remplissage du système d'évaporation met en jeu :
- une cuve de récupération (10) d'eaux usées,
- des moyens de surveillance (2, 3) associés à la cuve de récupération (10) et incluant un récepteur (3) pour détecter un niveau seuil de remplissage,
- un boîtier (1) central doté d'une instrumentation électronique permettant de recevoir des informations du récepteur (3), et
- des moyens de communication pour envoyer une alerte, déclenchés lorsque le récepteur (3) détecte que le niveau seuil (4) a été atteint.

8. Système selon la revendication 6 ou 7, **caractérisé en ce qu'**une détection par l'appareil de mesure et d'alerte de remplissage déclenche la mise en oeuvre de moyens de surveillance (2, 3) du système qui comprennent au moins un récepteur (3) d'ultrasons associé à un émetteur (2) d'ultrasons.

9. Système selon une des revendications 6 à 8, **caractérisé en ce que** la source d'alimentation électrique (15) fournit l'alimentation électrique d'au moins du ventilateur (13) motorisé et d'un émetteur (2) d'ultrasons des moyens de surveillance (2, 3), un bouton (22) d'arrêt des moyens (11) d'évaporation étant prévu dans le boîtier (1) central.

10. Système selon une des revendications 6 à 9, **caractérisé en ce que** le boîtier (1) central inclut un vumètre électronique pour fournir une information sur la hauteur de remplissage de la cuve de récupération (10).
